# EUROPEAN PATENT SPECIFICATION

(11) **EP 4 556 335 B1**
(45) Date of publication and mention of the grant of the patent: **14.01.2026**
(21) Application number: 24207296.5
(22) Date of filing: 17.10.2024
(51) Int. Cl.: B60W 30/14, B60W 30/18, B60W 40/04, B60W 50/14, B60W 60/00

(54) **DRIVING CONTROL APPARATUS FOR TRANSPORTATION SERVICE VEHICLE**
FAHRSTEUERUNGSVORRICHTUNG FÜR TRANSPORTDIENSTFAHRZEUG
APPAREIL DE COMMANDE DE CONDUITE POUR VÉHICULE DE SERVICE DE TRANSPORT

(30) Priority: 15.11.2023 JP 2023194471
(43) Date of publication of application: 21.05.2025
(73) Proprietor: Suzuki Motor Corporation, Shizuoka 432-8611 (JP)
(72) Inventor: KUBOTA, Hitoshi, Hamamatsu-shi, 432-8611 (JP)
(74) Representative: Plasseraud IP

(56) References cited:
- WO-A1-2022/093921
- US-A1- 2020 265 720
- US-A1- 2021 300 406

## Description

### [Technical Field]

The present invention relates to a driving control apparatus for a transportation service vehicle, in particular, a driving control apparatus for a self-driving vehicle for a transportation service.

### [Background Art]

Transportation services using self-driving vehicles have been proposed in various forms, e.g., fixed-time and fixed-route service, on-demand service, and fixed-route and on-demand service. A driving path for a self-driving vehicle is determined by combining a predetermined global path (e.g., a route from a starting point to a goal point) and a local path (e.g., obstacle avoidance, a temporary lane change, and stop and start at an intersection) determined according to a road environment near the vehicle. For example, if a traffic participant (a mobile object; a vehicle, a pedestrian, a bicycle or the like) is recognized around the vehicle and is predicted to become an obstacle, the vehicle is required to take evasive action such as changing path or stopping.

Among traffic participants, vehicles travel according to driving lanes, which are specified by lane markings or road structures, and traffic regulations, and thus vehicles, are not present as obstacles like a stopped vehicle. A vehicle ahead is not immediately recognized as an obstacle if an inter-vehicular distance from the vehicle ahead is maintained. However, in the case of pedestrians, it is more difficult to predict the behavior of the pedestrians than that of vehicles, and it is also difficult to determine whether a pedestrian is likely to be an obstacle, even though passage lanes such as a walkway and a sidewalk are provided.

Patent Literature 1 discloses that a risk region (risk potential) is set for a traffic participant (a pedestrian) recognized by the recognition unit, the risk region is corrected based on target environments such as the width of a sidewalk and the width of a roadway and the attributes of traffic participants, and vehicle speed control and steering control are performed based on the corrected risk region.

### [Citation List]

### [Patent Literature]

[Patent Literature 1] JP 2021-149390 A

### [Summary of Invention]

### [Problems to be Solved by the Invention]

In a method for setting a risk region for a traffic participant (a pedestrian), evaluation targets to be reflected in control are finally reduced by correcting the risk region based on a target environment. However, targets to be processed with set risk regions are not reduced, so that computation load may increase with the awareness or the population of traffic participants.

Furthermore, if actions are taken against individual traffic participants at an alert level and driving paths are changed for each action, surrounding vehicles may be affected, and feelings of security and comfort of passengers and staff members may also be affected. In particular, in vehicles based on passenger services like transportation service vehicles, growing unease and decrease in comfort of passengers may become problems to be solved first.

The present invention has been devised in view of such circumstances. An object of the present invention is to provide a driving control apparatus for a transportation service vehicle, the driving control apparatus adapting to the operating mode of the transportation service vehicle, being capable of preventing unease and decrease in comfort of passengers while preparing for an unexpected entry of a traffic participant into a driving path, and the required computational load is small. WO 2022/093921 A1, US 2020/265720 A1 and US 2021/300406 A1 disclose examples of control of transportation service vehicles.

### [Means for Solving the Problems]

In order to solve the problem, the present invention is a driving control apparatus for a transportation service vehicle, the driving control apparatus comprising: a driving operation determination unit that determines a target path based on a predetermined global path and a road environment near the vehicle; and a control unit that performs speed control and steering control such that the vehicle follows the target path, wherein
the driving operation determination unit is prepared to, when an accessible zone from which other traffic participants may enter is present on a driving course ahead of the vehicle, selectively perform a first alert mode in which the vehicle travels at a lower speed than in normal driving while keeping in the lane, or a second alert mode in which the vehicle changes to a lane away from the accessible zone while maintaining a normal driving speed, and configured to
perform the second alert mode if predetermined lane change conditions are established when a service operation is not being performed, and
perform the first alert mode if the service operation is being performed or the predetermined lane change conditions are not established.

### [Advantageous Effect of Invention]

As described above, the driving control apparatus for a vehicle according to the present invention performs the first alert mode, in which the vehicle travels at a lower speed while keeping in a lane during a service operation, in the presence of the accessible zone ahead of the vehicle, thereby preventing unease and decrease in the comfort of passengers while preparing for an unexpected entry of a traffic participant into a driving path. On the other hand, when a service operation is not being performed, the driving control apparatus performs the second alert mode, in which when a lane change is possible, the vehicle changes to a lane away from the accessible zone while maintaining the speed, thereby maintaining efficiency of a vehicle that is not in service while preparing for an unexpected entry of a traffic participant into a driving path. By not dealing with pedestrians whose behavior is difficult to predict individually based on the alert level, but dealing with them in a driving mode (alert mode) that takes into account road structure and driving conditions, this advantageously reduces computational load compared to dealing with pedestrians individually in an alert level.

### [Brief Description of Drawings]

[Figure 1] Figure 1 is a block diagram illustrating the outline of an automatic vehicle-control system.
[Figure 2] Figure 2(a) is a schematic drawing of driving in a normal driving mode, Figure 2(b) is a schematic drawing of driving in a first alert mode, and Figures 2(c1) and 2(c2) are schematic drawings of driving in a second alert mode.
[Figure 3] Figure 3 is a perspective view illustrating an example of an accessible zone on one side of a road.
[Figure 4] Figure 4 is a flowchart showing a flow of operating state determination according to a first embodiment.
[Figure 5] Figure 5 is a flowchart showing a flow of operating state determination according to a second embodiment.

### [Mode For Carrying Out the Invention]

Embodiments according to the present invention will be specifically described below with reference to the accompanying drawings.

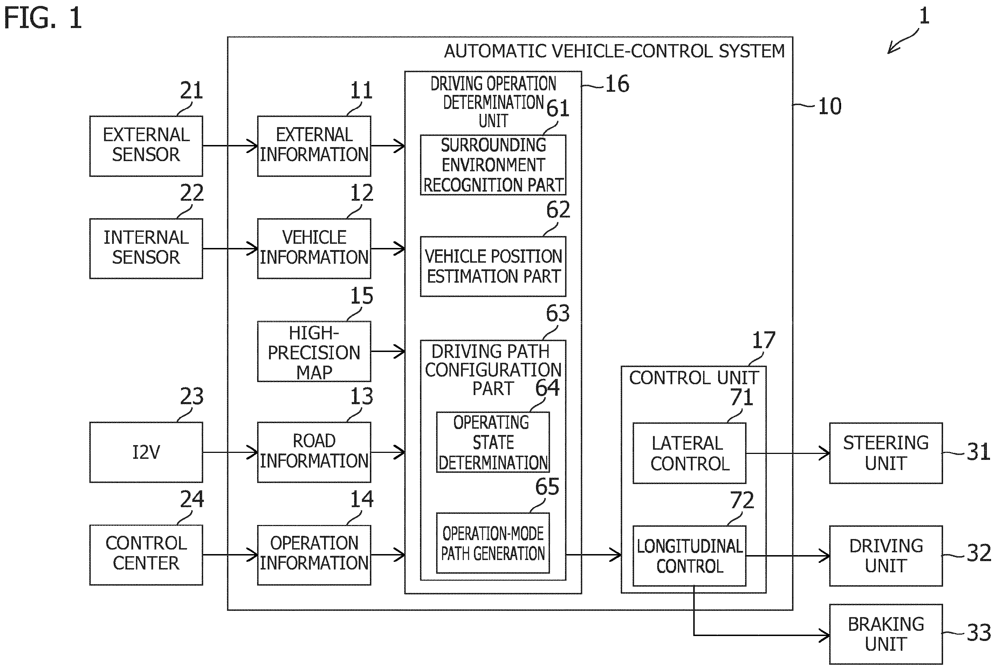

As illustrated in Figure 1, an automatic vehicle-control system 10 constituting the driving control apparatus of a vehicle 1 according to an embodiment of the present invention includes an external information acquisition part 11, a vehicle information acquisition part 12, a road information acquisition part 13, a transportation information acquisition part 14, a high-precision map 15, a driving operation determination unit 16, and a control unit 17.

The external information acquisition part 11 extracts information required for the driving operation determination unit 16 from data received from an external sensor 21 composed of multiple sensors, and processes the information in a format for surrounding environment recognition (lane recognition, road structure recognition, mobile object detection, signal/road sign recognition). The series of processing steps is performed at a predetermined time rate, and the information is updated and is stored in a storage device.

The external sensor 21 includes a LiDAR for detecting mobile objects (e.g., a vehicle, a bicycle, and a pedestrian) around the vehicle, stationary objects (e.g., an obstacle and a stopped vehicle), road structures (e.g., a curb, a median strip, a guardrail, a traffic signal, and a crossing gate), and structures (e.g., an external wall, a utility pole, and a tree), a radar (a millimeter wave radar, an infrared radar), a camera (an image sensor such as a monocular camera or a stereo camera), a GNSS (satellite positioning system) for detecting the position of the vehicle, and an acceleration sensor and a gyroscope sensor that detect the three-dimensional movement and orientation of the vehicle or an IMU (inertial measurement unit) as a combination of the sensors.

The vehicle information acquisition part 12 acquires, via intra-vehicle communications (in-vehicle network), a detected value of an internal sensor 22 including sensors such as a vehicle speed sensor, an acceleration sensor, a yaw rate sensor, a steering angle sensor, an accelerator sensor, and a brake sensor that determine the state of motion of the vehicle 1, extracts information necessary for the driving operation determination unit 16 according to each purpose of control, and processes the information in a format usable by the driving operation determination unit 16. The series of processing steps is performed at a predetermined time rate, and the information is updated and is stored in the storage device.

The road information acquisition part 13 extracts information necessary for the driving operation determination unit 16 from data that is distributed from a communication infrastructure (roadside infrastructure) built on a road and is received via an I2V receiver 23 through broadcast information distribution, V2I road/automobile communications, and mobile communications using a cellular communication network, the data including, for example, signal information at an intersection, information about surrounding vehicles, and traffic information including lane restrictions and regulation speeds in relation to position information. The road information acquisition part 13 then processes the information in a format usable by the driving operation determination unit 16. The series of processing steps is performed at a predetermined time rate, and the information is updated and is stored in the storage device.

The operation information acquisition part 14 extracts information necessary for the driving operation determination unit 16 from, for example, data received through mobile communications with a control center 24 of the self-driving vehicle 1, path update information, reservation information such as a pickup and drop-off point and time, user information, and authentication information. The operation information acquisition part 14 then processes the information in a format usable by the driving operation determination unit 16 according to each purpose. The series of processing steps is performed at a predetermined time rate, and the information is updated and is stored in the storage device.

The control center 24 is a control center for supervising the transportation service provided by the self-driving vehicle 1. The control center 24 manages the overall transportation service at, for example, the current position of the self-driving vehicle 1 and communicates information with each self-driving vehicle.

The high-precision map 15 is a map system (database) having a multilevel data hierarchy including information necessary for automated driving, for example, position information about a road network covering the driving area of the self-driving vehicle 1, three-dimensional information about road structures, surrounding structures, and trees, driving lane information, regulation information including regulation speeds, parking prohibition, and overtaking (passing) prohibition, and the presence or absence of an accessible zone into a roadway.

The accessible zone (that is, an alert zone) as a criterion of driving modes (alert mode 1, alert mode 2), which will be described later, is determined by, for example, the presence or absence of a structure (e.g., a guardrail, a plant, or a curb) between a roadway and a sidewalk, the height of the structure, and intervals and spacings between structures. For example, if there is a guardrail having a height of 50 cm or more, entry is impossible (not an inaccessible zone), and if a spacing between a utility pole and a guardrail is less than a predetermined value (e.g., 30 cm), entry is impossible (not an accessible zone).

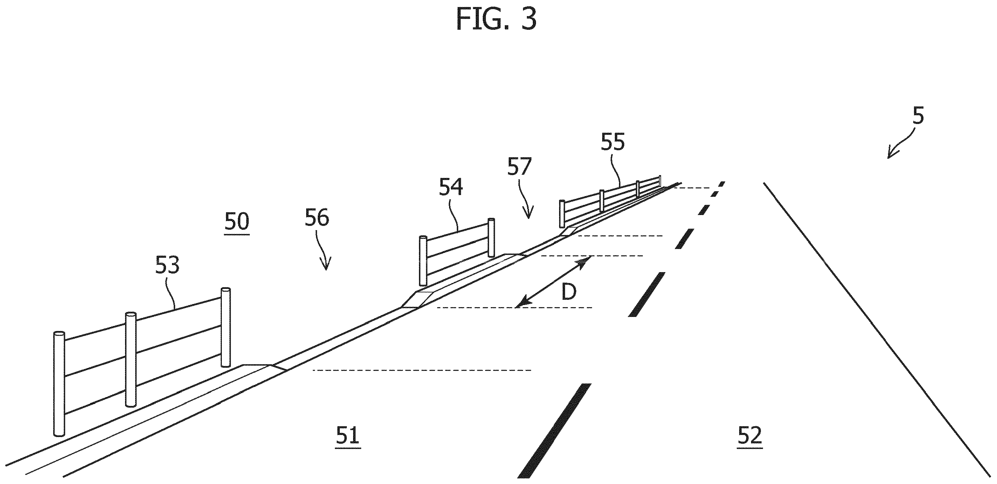

Figure 3 illustrates a road structure example including accessible zones 56 and 57. In this example, guardrails 53, 54, and 55 are discontinuously provided at a boundary portion between a sidewalk 50 and a road 5 that includes a first lane 51 and a second lane 52. The accessible zones 56 and 57 where pedestrians may enter to the roadway 5 (51) from the sidewalk 50 are formed between the guardrails. These determinations are set and updated based on external information acquired by the external information acquisition part 11 in addition to map information of the high-precision map 15.

The driving operation determination unit 16 includes a unit that performs processing including the surrounding environment recognition, vehicle position estimation, and path planning of the self-driving vehicle 1 and determines a target path based on a global path (a route or a global path) based on a predetermined driving plan and a local path corresponding to a driving mode specified according to a road environment near the vehicle and the operation conditions.

A surrounding environment recognition part 61 combines external information acquired by the external information acquisition part 11, specifically, information about mobile objects (e.g., a vehicle, a bicycle, and a pedestrian) around the vehicle, stationary objects (e.g., an obstacle and a stopped vehicle), road structures (e.g., a curb, a median strip, a guardrail, a traffic signal, and a crossing gate), and structures (e.g., an external wall, a utility pole, and a tree) and performs surrounding environment recognition (lane recognition, road structure recognition, mobile object detection, signal/road sign recognition) processing of the self-driving vehicle 1.

A vehicle position estimation part 62 estimates the position (e.g., coordinate values X, Y, Z and latitude/longitude) of the self-driving vehicle 1 on a map and the traveling direction (yaw angle) of the self-driving vehicle 1. Usable methods of estimation are an estimation method including matching of the measurement points of a LiDAR constituting the external sensor 21 and the points of the high-precision map 15 (for example, NDT matching (Normal Distribution Transform)), an estimation method including matching of feature points extracted from a camera image and the points of the high-precision map 15 (for example, Visual SLAM "Simultaneous Localization and Mapping"), a method of estimation from a latitude and a longitude that are detected by a GNSS, and a method of estimation from a vehicle movement and rotation that are determined from a vehicle speed and a yaw rate (for example, Dead Reckoning).

A driving path configuration part 63 determines a target path for the self-driving vehicle 1 based on the determined position and orientation of the self-driving vehicle 1 by the vehicle position estimation part 62 and the surrounding environment recognized by the surrounding environment recognition part 61 and according to the driving mode determined by an operating state determination part 64.

The operating state determination part 64 selects one of a normal driving mode, the alert mode 1, and the alert mode 2 according to the surrounding environment and the operation conditions of the self-driving vehicle 1. Criteria for determining the driving mode include operation conditions such as the presence or absence of passengers, whether transportation service is being offered, whether the vehicle is driven in a fixed-time and fixed-route operation in addition to the presence or absence of the accessible zone, and lane change conditions such as the presence or absence of an adjacent lane and the presence or absence of a vehicle traveling in a predetermined region of an adjacent lane. The driving modes are set as follows:

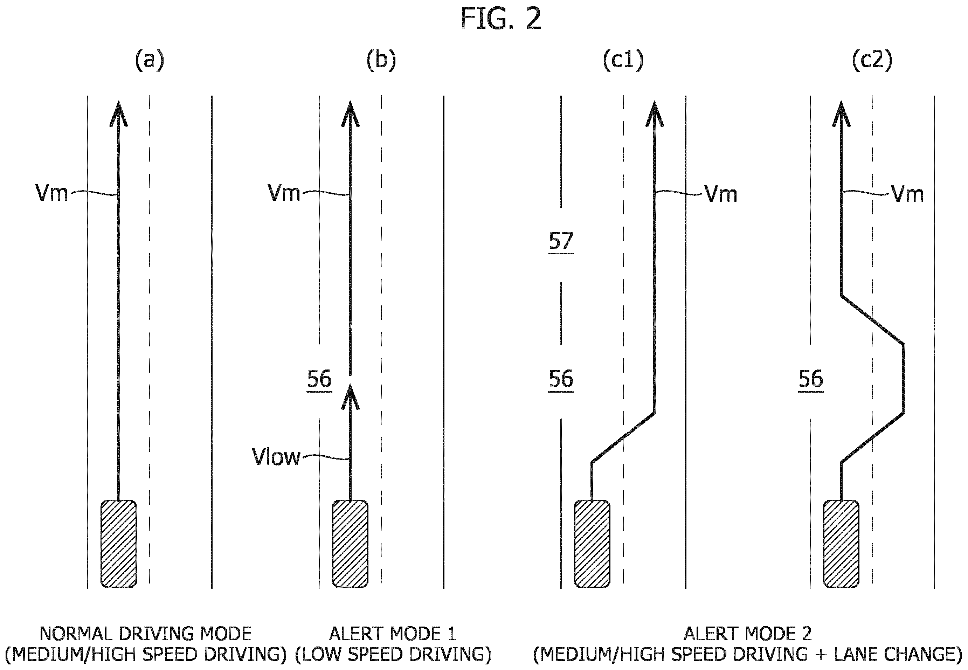

In the normal driving mode, as illustrated in Figure 2(a), the vehicle travels at a medium/high set speed (Vm) while keeping in the first lane (left lane). In the presence of a vehicle preceding at a set speed or less, the vehicle follows the preceding vehicle while keeping a set intervehicle time between the vehicles.

In the alert mode 1, as illustrated in Figure 2(b), when an accessible zone (56) is present ahead of the vehicle and predetermined transition conditions are established, the vehicle travels at a low set speed (Vlow) while keeping in the first lane (left side), thereby preparing for the entry of another traffic participant into the lane of the vehicle to avoid a collision with the traffic participant. Also in this case, in the presence of a vehicle preceding at the set speed or less, the vehicle follows the preceding vehicle while keeping a set inter-vehicle time between the vehicles.

In the alert mode 2, as illustrated in Figures 2(c1) and 2(c2), when an accessible zone is present ahead of the vehicle and predetermined transition conditions are established, the vehicle moves to the second lane (right lane) remote from the accessible zone (56) and travels at the medium/high set speed (Vm). Also in this case, in the presence of a vehicle preceding at the set speed or less, the vehicle follows the preceding vehicle while keeping a set inter-vehicle time between the vehicles.

A transportation-mode path generation part 65 generates a driving path from a driving vehicle speed pattern for keeping in the first lane, a path and a driving vehicle speed pattern for a lane change to the second lane, and a path and a vehicle speed pattern for a lane change from the second lane to the first lane according to the driving mode (one of the normal driving mode, the alert mode 1, and the alert mode 2) selected by the operating state determination part 64.

Basically, in the alert mode 2, a path is set at a transition to the alert mode 2 such that the vehicle moves to the second lane (right lane), travels over a certain section (predetermined time), and then returns to the first lane (left lane) as illustrated in Figure 2(c2). However, as illustrated in Figure 2(c1), when the accessible zones (56, 57) are consecutive with a short interval less than a predetermined distance D, the vehicle further travels on the second lane (right lane) over a certain section (predetermined time), moves to the first lane (left lane), and then returns to the normal driving mode.

Furthermore, although not shown in the Figure, even in the alert mode 1, when the accessible zones (56, 57) are consecutive with a short interval less than a predetermined distance D, the vehicle may continue to travel at the low set speed (Vlow) and return to the normal driving mode in the absence of an accessible zone. In this case, the predetermined distance D for determining the continuation of the alert mode 1 can be equal to or less than the predetermined distance D for determining the continuation of the alert mode 2.

The control unit 17 includes a lateral control unit 71 that outputs a steering angle command to a steering unit 31, the steering angle command indicating a target steering angle for causing the vehicle 1 to follow the target path determined by the driving operation determination unit 16, and a longitudinal control unit 72 that outputs a speed command (acceleration/deceleration command) for achieving a target speed, to a driving unit 32 and a braking unit 33.

Each of the units constituting the automatic vehicle-control system 10 described above is implemented as a computer (ECU) including ROM that stores programs operable to execute the functions, a CPU that performs arithmetic processing, RAM reading the programs and serving as a work area of the CPU and a temporary storage of operation results, and an input/output interface.

The steering unit 31 is composed of a steering mechanism including a steering wheel, and a steering actuator (an ESP motor constituting an electric power steering system). The driving unit 32 includes an internal combustion engine and an engine controller in an internal combustion engine vehicle, includes a motor generator and a motor controller in an electric motor vehicle, and includes these components and a hybrid controller in a hybrid vehicle. The braking unit 33 includes a braking device for braking each wheel, a brake actuator, and a brake controller (ESC controller).

### (First Embodiment)

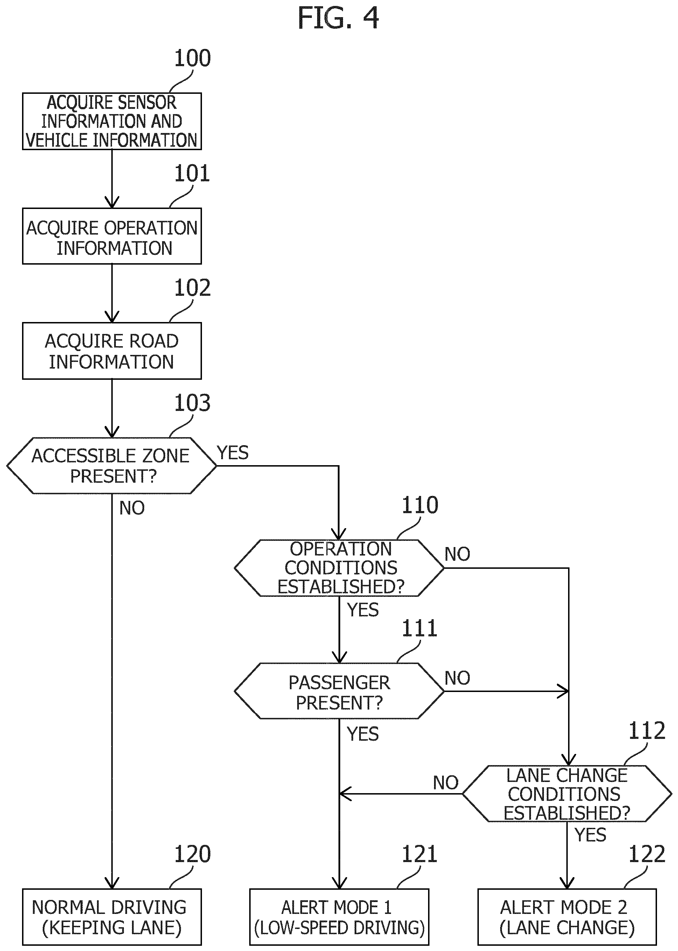

Figure 4 is a flowchart showing a flow of operating state determination according to a first embodiment. During the driving of the vehicle 1, such determining operations are sequentially performed at a predetermined time rate.

First, sensor information and vehicle information are acquired as a basis for determination from the external information acquisition part 11 and the vehicle information acquisition part 12, the information is verified against the map information of the high-precision map 15 by surrounding environment recognition and vehicle position estimation, and then a road structure ahead of the vehicle, surrounding vehicles, and traffic participants are monitored (step 100).

In addition, operation information acquired by the operation information acquisition part 14 is referred to (step 101), and road information acquired by the road information acquisition part 13 is referred to (step 102).

In the absence of an accessible zone on a driving course ahead of the vehicle (step 103; NO), the normal driving mode is selected to continue driving in the normal driving mode (step 120).

In the presence of an accessible zone on the driving course ahead of the vehicle (step 103; YES), whether the operation conditions (transportation service operation conditions) of the vehicle 1 are established is checked. If the service operation conditions such as driving in a fixed-time and fixed-route operation and ongoing operation service are established (step 110; YES) and the vehicle carries passengers (step 111; YES), the alert mode 1 is selected and the vehicle shifts to low-speed driving while keeping in the lane (step 121).

If the operation conditions (service operation conditions) are not established (step 110; NO), for example, when the vehicle 1 is out of service or if lane change conditions are established (step 112; YES), for example, if the service operation conditions are established (step 110; YES) but the vehicle 1 carries no passengers (step 111; NO) in the absence of another vehicle in a predetermined range of an adjacent lane, the alert mode 2 is selected and the lane is changed to the second lane after the blinker is turned on (step 122).

In addition, if the lane change conditions are not established (step 112; NO), for example, in the presence of another vehicle in a predetermined range of an adjacent lane, the alert mode 1 is selected and the vehicle shifts to low-speed driving while keeping in the lane (step 121).

As described above, in order to avoid repetition of speed changes during a shift to the alert mode 1 or lane changes during a shift to the alert mode 2 in a short period, driving in the alert mode 1 or 2 is continued for a certain section (predetermined time) after a shift to the alert mode 1 or 2. In this case, a mode change should be prohibited for a predetermined time to prevent it affecting driving control.

Transportation service vehicles are provided in several operating forms, for example, on-demand vehicles like a taxi are available in addition to vehicles driven in fixed-time and fixed-route operations, for example, a regular-route bus. In addition, shared taxis (ride share taxis) are provided as an intermediate operating form. The determination conditions may be changed depending on the operating form.

For example, in the absence of a passenger in a fixed-time and fixed-route operation in the embodiment described above, the alert mode 2 is selected as in the case of an out-of-service vehicle. When the operation conditions are established, the alert mode 1 may be selected regardless of the presence or absence of a passenger.

### (Second Embodiment)

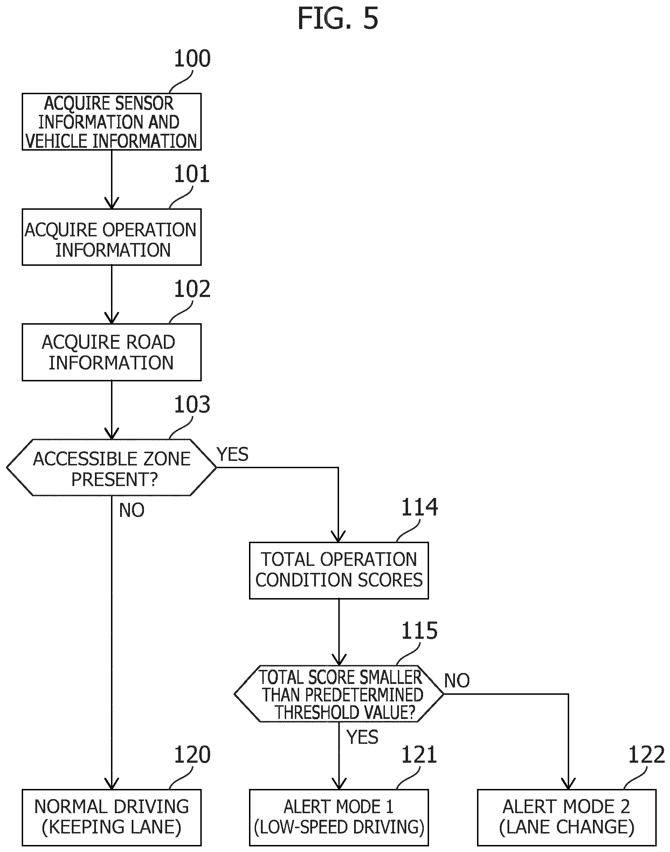

Figure 5 is a flowchart showing a flow of operating state determination according to a second embodiment. The basic flow of steps 100 to 103 is identical to that of the first embodiment. For the determination of the alert modes 1 and 2, a scoring table is set in advance such that a weight is assigned to each of the conditions.

| (Transportation conditions) | (YES) | (NO) |
|---|---|---|
| Service operation | -3 | +2 |
| Fixed-time and fixed-route operation | -2 | +2 |
| Presence of a passenger | -1 | +1 |
| Presence of a rear vehicle | -1 | +1 |
| Presence of a speed limit | -1 | +1 |

In the presence of an accessible zone on a driving course ahead of the vehicle (step 103; YES), the scores of the operation conditions are totaled (step 114). If the total score is less than a predetermined threshold value (e.g., 0) (step 115; YES), the alert mode 1 is selected (step 121). If the total score is equal to or greater than the predetermined threshold value (e.g., 0) (step 115; NO), the alert mode 2 is selected (step 122).

In this embodiment, road environment conditions are added in addition to the operation conditions. Conditions can be further added as appropriate depending on the form of transportation, such as a time zone, weather, the presence or absence and amount of delay of an operating time (fixed-time and fixed-route), and the presence or absence of a reservation for loading or unloading at the next stop (shared taxi).

As described above, the driving control apparatus for a vehicle according to the present invention performs a first alert mode, in which a vehicle drives at a low speed while keeping in a lane during a service operation, in the presence of an accessible zone ahead of the vehicle, thereby preventing unease and decline in the comfort of passengers while preparing for an unexpected entry of a traffic participant into a driving path.

In addition, when a service operation is not being performed, the driving control apparatus performs a second alert mode, in which when a lane change is allowed, a vehicle moves to another lane remote from an accessible zone while maintaining speed, thereby preventing reduction in efficiency of a vehicle that is not in service and the delivery efficiency of the vehicle while preparing for an unexpected entry of a traffic participant into a driving path.

In addition, pedestrians are not separately handled at an alert level because the actions of pedestrians are difficult to predict. Pedestrians are handled in the alert modes 1 and 2 in consideration of a road structure and transportation conditions, so that the computation load can be lighter than that of separate handling from an alert level and the system resource can be used for other processing, for example, obstacle detection or surrounding environment recognition.

In the absence of passengers during a service operation, the comfort of passengers does not need to be considered. Thus, the second alert mode is performed when the lane change conditions are established, thereby properly maintaining the efficiency of a deadhead vehicle and the delivery efficiency of the vehicle while preparing for an unexpected entry of a traffic participant into a driving path.

In addition, even if a service operation is not performed and the lane change conditions are established, the first alert mode is performed when a driving section has a lower speed limit than normal driving, thereby preventing unease and decrease in the comfort of passengers while preparing for an unexpected entry of a traffic participant into a driving path.

The embodiments of the present invention were described in the foregoing description. The present invention is not limited to the embodiments described above, and it can be modified and changed in various ways within the scope of the appended claims based on the technical idea of the present invention.

### [Reference Signs List]

- 1: Vehicle
- 5: Road
- 10: Automatic vehicle-control system
- 11: External information acquisition part
- 12: Vehicle information acquisition part
- 13: Road information acquisition part
- 14: Operation information acquisition part
- 15: High-precision map
- 16: Driving operation determination unit
- 17: Control unit
- 21: External sensor
- 22: Internal sensor
- 23: I2V receiver
- 24: Control center
- 31: Steering unit
- 32: Driving unit
- 33: Braking unit
- 50: Sidewalk (Road side space)
- 51: First lane
- 52: Second lane
- 53, 54, 55: Guardrail
- 56, 57: Accessible zone
- 61: Surrounding environment recognition part
- 62: Vehicle position estimation part
- 63: Driving path configuration part
- 64: Operating state determination part
- 65: Operation-mode path generation part

## Claims

1. A driving control apparatus for a transportation service vehicle (1), the driving control apparatus comprising: a driving operation determination unit (16)
that determines a target path based on a predetermined global path and a road environment near the vehicle (1); and a control unit (17) that performs speed control and steering control such that the vehicle (1) follows the target path, **characterized in that**
the driving operation determination unit (16) is configured to, when an accessible zone (56, 57) from which other traffic participants may enter is present on a driving course ahead of the vehicle, selectively perform a first alert mode in which the vehicle travels at a lower speed than in normal driving while keeping in the lane, or a second alert mode in which the vehicle changes to a lane away from the accessible zone while maintaining a normal driving speed, and configured to
perform the second alert mode if predetermined lane change conditions are established when a service operation is not being performed, and
perform the first alert mode if the service operation is being performed or the predetermined lane change conditions are not established.

2. The driving control apparatus according to claim 1, wherein if the lane change conditions are established in absence of passengers even during a service operation, the second alert mode is performed.

3. The driving control apparatus according to claim 1, wherein even if the service operation is not being performed and the lane change conditions are established, the first alert mode is performed in a section having a lower speed limit than in normal driving.

4. The driving control apparatus according to claim 1, wherein when the vehicle passes the accessible zone in the first alert mode,
the first alert mode is terminated to return to normal driving if a distance (D) or an estimated time necessary to reach a subsequent accessible zone is equal to or greater than a first predetermined value, and
the first alert mode is maintained if a distance or an estimated time necessary to reach the subsequent accessible zone is less than the first predetermined value.

5. The driving control apparatus according to claim 1, wherein when the vehicle passes the accessible zone in the second alert mode,
the vehicle moves to an original lane in view of the lane change conditions and terminates the second alert mode to return to normal driving if a distance or an estimated necessary time to the subsequent accessible zone is equal to or greater than a second predetermined value, and
the second alert mode is maintained if a distance or an estimated time necessary to reach the subsequent accessible zone is less than the second predetermined value.

6. A driving control apparatus for a transportation service vehicle (1), the driving control apparatus comprising: a driving operation determination unit (16) that determines a target path based on a predetermined global path and a road environment near the vehicle; and a control unit (17) that performs speed control and steering control such that the vehicle follows the target path,
**characterized in that**
the driving operation determination unit is configured to, when an accessible zone (56, 57) from which other traffic participants may enter is present on a driving course ahead of the vehicle, selectively perform a first alert mode in which the vehicle travels at a lower speed than in normal driving while keeping in the lane, or a second alert mode in which the vehicle changes to a lane away from the accessible zone while maintaining a normal driving speed, and configured to
perform the step of summing scores weighted for operation conditions, the operation conditions including at least whether a service operation is being performed, whether the vehicle is driven in a fixed-time and fixed-route operation, whether passengers are present or absent, and whether predetermined lane change conditions are established, and
perform the second alert mode if a total of the scores is equal to or greater than a predetermined value, and perform the first alert mode if the total of the scores is less than the predetermined value.

## Patentansprüche

1. Fahr-Steuervorrichtung für ein Transport-Dienstfahrzeug (1), die Fahr-Steuervorrichtung umfassend:
eine Fahrbetrieb-Bestimmungseinheit (16), welche einen Zielpfad auf Grundlage eines vorbestimmten globalen Pfads und einer Straßenumgebung nahe dem Fahrzeug (1) bestimmt;
und eine Steuereinheit (17), welche eine Geschwindigkeitssteuerung und eine Lenksteuerung derart durchführt, dass das Fahrzeug (1) dem Zielpfad folgt,
**dadurch gekennzeichnet, dass** die Fahrbetrieb-Bestimmungseinheit (16) dazu eingerichtet ist, wenn eine zugängliche Zone (56, 57), von welcher andere Verkehrsteilnehmer eintreten können, auf einem Fahrtkurs vor dem Fahrzeug vorliegt, selektiv einen ersten Alarmmodus durchzuführen, in welchem sich das Fahrzeug bei einer niedrigeren Geschwindigkeit als bei einem normalen Fahren fortbewegt, während die Spur gehalten wird, oder einen zweiten Alarmmodus, in welchem das Fahrzeug zu einer Spur weg von der zugänglichen Zone wechselt,
während eine normale Fahrgeschwindigkeit beibehalten wird, und dazu eingerichtet ist,
den zweiten Alarmmodus durchzuführen, wenn vorbestimmte Spurwechsel-Bedingungen erfüllt sind, wenn ein Dienstbetrieb nicht durchgeführt wird, und
den ersten Alarmmodus durchzuführen, wenn der Dienstbetrieb durchgeführt wird oder die vorbestimmten Spurwechsel-Bedingungen nicht erfüllt sind.

2. Fahr-Steuervorrichtung nach Anspruch 1, wobei, wenn die Spurwechsel-Bedingungen in Abwesenheit von Passagieren selbst während eines Dienstbetriebs erfüllt sind, der zweite Alarmmodus durchgeführt wird.

3. Fahr-Steuervorrichtung nach Anspruch 1, wobei, selbst wenn der Dienstbetrieb nicht durchgeführt wird und die Spurwechsel-Bedingungen erfüllt sind, der erste Alarmmodus in einem Abschnitt durchgeführt wird, welcher eine niedrigere Geschwindigkeitsbeschränkung aufweist als bei normalem Fahren.

4. Fahr-Steuervorrichtung nach Anspruch 1, wobei, wenn das Fahrzeug die zugängliche Zone in dem ersten Alarmmodus passiert,
der erste Alarmmodus beendet wird, um zu einem normalen Fahren zurückzukehren, wenn eine Distanz (D) oder eine geschätzte Zeit, welche zum Erreichen einer nachfolgenden zugänglichen Zone benötigt wird, gleich oder größer als ein erster vorbestimmter Wert ist, und
der erste Alarmmodus beibehalten wird, wenn eine Distanz oder eine geschätzte Zeit, welche zum Erreichen der nachfolgenden zugänglichen Zone benötigt wird, kleiner als der erste vorbestimmte Wert ist.

5. Fahr-Steuervorrichtung nach Anspruch 1, wobei, wenn das Fahrzeug die zugängliche Zone in dem zweiten Alarmmodus passiert,
sich das Fahrzeug zu einer ursprünglichen Spur angesichts der Spurwechsel-Bedingungen bewegt und den zweiten Alarmmodus beendet, um zu einem normalen Fahren zurückzukehren, wenn eine Distanz oder eine geschätzte benötigte Zeit zu der nachfolgenden zugänglichen Zone gleich oder größer als ein zweiter vorbestimmter Wert ist, und
der zweite Alarmmodus beibehalten wird, wenn eine Distanz oder eine geschätzte Zeit, welche zum Erreichen der nachfolgenden zugänglichen Zone benötigt wird, kleiner als der zweite vorbestimmte Wert ist.

6. Fahr-Steuervorrichtung für ein Transportdienst-Fahrzeug (1), die Fahr-Steuervorrichtung umfassend:
eine Fahrbetrieb-Bestimmungseinheit (16), welche einen Zielpfad auf Grundlage eines vorbestimmten globalen Pfads und einer Straßenumgebung nahe dem Fahrzeug bestimmt;
und eine Steuereinheit (17), welche eine Geschwindigkeitssteuerung und eine Lenksteuerung derart durchführt, dass das Fahrzeug dem Zielpfad folgt,
**dadurch gekennzeichnet, dass** die Fahrbetrieb-Bestimmungseinheit dazu eingerichtet ist, wenn eine zugängliche Zone (56, 57), von welcher andere Verkehrsteilnehmer eintreten können, auf einem Fahrtkurs vor dem Fahrzeug vorliegt, selektiv einen ersten Alarmmodus durchzuführen, in welchem sich das Fahrzeug bei einer niedrigeren Geschwindigkeit als bei einem normalen Fahren fortbewegt, während die Spur gehalten wird, oder einen zweiten Alarmmodus, in welchem das Fahrzeug zu einer Spur weg von der zugänglichen Zone wechselt,
während eine normale Fahrgeschwindigkeit beibehalten wird, und dazu eingerichtet ist,
den Schritt eines Summierens von Bewertungen durchzuführen, welche nach Betriebsbedingungen gewichtet sind, wobei die Betriebsbedingungen wenigstens umfassen, ob ein Dienstbetrieb durchgeführt wird, ob das Fahrzeug in einem Betrieb mit fester Zeit und fester Route gefahren wird, ob Passagiere anwesend oder abwesend sind, und ob vorbestimmte Spurwechsel-Bedingungen erfüllt sind, und
den zweiten Alarmmodus durchzuführen, wenn ein Gesamtwert der Bewertungen gleich oder größer als ein vorbestimmter Wert ist und den ersten Alarmmodus durchzuführen, wenn der Gesamtwert der Bewertungen kleiner als der vorbestimmte Wert ist.

## Revendications

1. Appareil de commande de conduite pour un véhicule de service de transport (1), l'appareil de commande
de conduite comprenant : une unité de détermination d'opération de conduite (16) qui détermine une trajectoire cible sur la base
d'une trajectoire globale prédéterminée et d'un environnement routier près du véhicule (1) ; et une unité de commande (17) qui
réalise une commande de vitesse et une commande de direction de sorte que le véhicule (1) suive la trajectoire cible,
**caractérisé en ce que**
l'unité de détermination d'opération de conduite (16) est configurée pour, lorsqu'une zone accessible (56, 57) à partir de laquelle d'autres participants au trafic peuvent entrer est présente sur un parcours de conduite devant le véhicule, réaliser de manière sélective un premier mode d'alerte dans lequel le véhicule roule à une vitesse inférieure à celle d'une conduite normale tout en restant dans la voie, ou un second mode d'alerte dans lequel le véhicule change de voie pour s'éloigner de la zone accessible tout en maintenant une vitesse de conduite normale, et configurée pour réaliser le second mode d'alerte si des conditions de changement de voie prédéterminées sont établies lorsqu'aucune opération de service n'est réalisée, et réaliser le premier mode d'alerte si l'opération de service est réalisée ou que les conditions de changement de voie prédéterminées ne sont pas établies.

2. Appareil de commande de conduite selon la revendication 1, dans lequel, si les conditions de changement de voie sont établies en l'absence de passagers même pendant une opération de service, le second mode d'alerte est réalisé.

3. Appareil de commande de conduite selon la revendication 1, dans lequel, même si l'opération de service n'est pas réalisée et que les conditions de changement de voie sont établies, le premier mode d'alerte est réalisé dans une section ayant une limite de vitesse inférieure à celle d'une conduite normale.

4. Appareil de commande de conduite selon la revendication 1, dans lequel, lorsque le véhicule passe la zone accessible dans le premier mode d'alerte,
le premier mode d'alerte est coupé pour revenir à la conduite normale si une distance (D) ou un temps estimé nécessaire pour atteindre une zone accessible suivante sont égaux ou supérieurs à une première valeur prédéterminée, et
le premier mode d'alerte est maintenu si une distance ou un temps estimé nécessaire pour atteindre la zone accessible suivante sont inférieurs à la première valeur prédéterminée.

5. Appareil de commande de conduite selon la revendication 1, dans lequel lorsque le véhicule passe la zone accessible dans le second mode d'alerte,
le véhicule se déplace vers une voie d'origine en fonction des conditions de changement de voie et coupe le second mode d'alerte pour revenir à la conduite normale si une distance ou un temps nécessaire estimé jusqu'à la zone accessible suivante sont égaux ou supérieurs à une seconde valeur prédéterminée, et
le second mode d'alerte est maintenu si une distance ou un temps estimé nécessaire pour atteindre la zone accessible suivante sont inférieurs à la seconde valeur prédéterminée.

6. Appareil de commande de conduite pour un véhicule de service de transport (1), l'appareil de commande de conduite comprenant : une unité de détermination d'opération de conduite (16) qui détermine une trajectoire cible sur la base d'une trajectoire globale prédéterminée et d'un environnement routier près du véhicule ; et une unité de commande (17) qui réalise une commande de vitesse et une commande de direction de sorte que le véhicule suive la trajectoire cible,
**caractérisé en ce que**
l'unité de détermination d'opération de conduite est configurée pour, lorsqu'une zone accessible (56, 57) à partir de laquelle d'autres participants au trafic peuvent entrer est présente sur un parcours de conduite devant le véhicule, réaliser de manière sélective un premier mode d'alerte dans lequel le véhicule roule à une vitesse inférieure à celle d'une conduite normale tout en restant dans la voie, ou un second mode d'alerte dans lequel le véhicule change de voie pour s'éloigner de la zone accessible tout en maintenant une vitesse de conduite normale, et configurée pour réaliser l'étape de l'addition de scores pondérés pour des conditions d'opération, les conditions d'opération comprenant au moins si une opération de service est réalisée, si le véhicule est conduit dans une opération à temps fixe et à itinéraire fixe, si des passagers sont présents ou absents, et si des conditions de changement de voie prédéterminées sont établies, et
réaliser le second mode d'alerte si le total des scores est égal ou supérieur à une valeur prédéterminée, et réaliser le premier mode d'alerte si le total des scores est inférieur à la valeur prédéterminée.
